Europäisches Patentamt

European Patent Office

Office européen des brevets

(11) Publication number: **0 383 268**
**A2**

(12) # EUROPEAN PATENT APPLICATION

(21) Application number: **90102810.0**

(22) Date of filing: **13.02.90**

(51) Int. Cl.⁵: **G06F 9/38, G06F 9/32**

(30) Priority: **13.02.89 JP 31044/89**

(43) Date of publication of application:
**22.08.90 Bulletin 90/34**

(84) Designated Contracting States:
**CH DE ES FR GB IT LI NL SE**

(71) Applicant: **HITACHI, LTD.**
**6, Kanda Surugadai 4-chome**
**Chiyoda-ku, Tokyo 100(JP)**

Applicant: **HITACHI KEIYO ENGINEERING CO.**
**7-1-1 Higashi Narashino**
**Narashino-shi, Chiba(JP)**

(72) Inventor: **Sugiyama, Tomohito**
**1-412 4-92 Rokkodai**
**Matudoshi Chiba(JP)**
Inventor: **Sano, Tadao**
**8492-6 Kobatakeshinmati**
**Choshishi Chiba(JP)**
Inventor: **Itou, Atusi**
**3-406 5-39 Narashinodai**
**Hunabashishi Chiba(JP)**

(74) Representative: **Strehl, Schübel-Hopf,**
**Groening**
**Maximilianstrasse 54 Postfach 22 14 55**
**D-8000 München 22(DE)**

(54) **Data processor in which branching during program execution is controlled by the contents of a branch address table.**

(57) A data processor is provided with a branch destination location table (4) and a controller (7) to control branching in the execution of branch instructions. The branch destination location table (4) stores the addresses of all branch destinations in storage locations therein identified by a label identifier in the branch. When a branch instruction is fetched from a program memory (1), the branch destination location table (4) is accessed using the label identifier to determine if a valid branch destination address is stored therein. If a valid address is found, that address is inserted in a program counter (2) and branching is achieved. If an invalid address is found, the program counter (2) is simply incremented to fetch the next instruction in the program sequence.

FIG. 1

# DATA PROCESSOR IN WHICH BRANCHING DURING PROGRAM EXECUTION IS CONTROLLED BY THE CONTENTS OF A BRANCH ADDRESS TABLE

## BACKGROUND OF THE INVENTION

The present invention relates in general to a method for controlling the editing and executing of programs in a program controlled system, and more particularly to a data processor which is suitable for use in a control system in which a control output signal is produced under program control, and in which it is possible to edit the program without fear of turning off the control output signal.

In many control systems which are designed to control continuous processes, it may be dangerous to interrupt control of the operation or process. This is particularly true of continuous processes performed in chemical plants, as well as the operation of safety systems of various types. Problems from interrupted control also occur in the supply of electric power to hospital units and in the operation of various automated manufacturing facilities designed to operate continuously around the clock.

Many control processes are performed under the control of a programmable controller, which produces a control output signal to control the process on the basis of process condition signals under control of a stored program. The stored program includes operation instructions, branch instructions and branch destination instructions, and is capable of being edited or modified by an operator during the course of process control to modify the control process as it is being run. Such editing typically includes the addition and/or deletion of subroutines by operator commands entered through the keyboard, and may involve the storing of new branch destination instructions in the program memory or the deletion or shifting of such instructions.

In a prior apparatus of this type, as described in Japanese Laid-open application No. 61-61413, when no branch destination instruction is put in storage corresponding to a branch instruction in the program, the execution of the branch instruction is stopped and re-editing of the program is required. Hence, such an apparatus is not suitable for the type of process control which is not permitted to be stopped.

Prior to the present invention, when a branch instruction and a program in operation were changed during the running of a process, there was either no way to indicate the occurrence of errors in the editing operations, such as addition, deletion or movement of instructions, or detection of an abnormality resulting from an editing error resulted in stopping of program execution and interruption of the output control signal. In either case, the program was subjected to execution with no guarantee of satisfactory continuous control. The only other measure considered to prevent interruption of the output control signal involved protective measures for preventing the editing or modification of the control program during the running of the control process; however, this seriously limits the flexibility of process control and is therefore undesirable.

Hence, there has been a problem in systems of the type described in that editing of a control program, including addition, deletion or movement of branch instructions and branch destination instructions, could not be performed while ensuring continuous, uninterrupted control of the process. This problem has seriously limited the applicability of such systems to various types of continuous process control.

## SUMMARY OF THE INVENTION

An object of the present invention is to make it possible to perform editing of a program, including branch instructions and branch destination instructions, in a program controlled system at any time during system operation and without interruption of system control.

Another object of the present invention is to provide a control system of the type described in which, even if an incorrect program is input as part of an editing operation, the incorrect program is prevented from being executed, with the result that system control is not interrupted and continuous process control is maintained under all circumstances.

To achieve these objects, in accordance with the present invention, each branch destination instruction for a branch instruction is provided with identification information for each branch destination, which identification information is stored in a location table in memory and indicates whether or not the program memory address of the branch destination instruction is valid. For example, such identification information may be provided in the form of a flag or other indicator specifying whether the designated program memory location is valid or invalid. On the basis of this identification information, if the program memory location is valid, the branch instruction is executed, and if it is invalid, the instruction following the branch instruction is executed.

In a program editing operation, when a branch instruction is input, the number for the branch destination is stored in the program memory in a form similar to that associated with an operand. When a branch destination location, or a branch destination instruction representative of the branch destination, is input, it is stored in the program memory and, at the same time, the storage location of the branch destination instruction is written into the location table. Further, when a branch destination instruction is deleted, a value representative of an invalid location is written into the location table at the location corresponding to the deleted instruction. Further, when the storage location of the branch destination instruction is changed owing to entry or deletion of another instruction, the location information in the location table at the corresponding position is rewritten at the storage location after the change. Thus, when executing a branch instruction, the location table is referred to for the storage location of the branch destination instruction for the intended branching and it is detected whether the location is valid or invalid.

In this way, it is possible in accordance with the invention to determine at the time of execution of a branch instruction whether the branch instruction is for branching to a branch destination which is or is not in storage and, when the branch destination instruction is not in storage, to invalidate the branch instruction. If the branch destination instruction is correctly in storage, the branch instruction can then be correctly executed. Thus, an abnormality is prevented from the occurring due to execution of branching to an invalid location and the operation of the apparatus under control can be prevented from being interrupted.

These and other objects features and advantages of the present invention will be made more apparent from the following detailed description of a preferred embodiment of the present invention as illustrated in the accompanying drawings.

## BRIEF DESCRIPTION OF THE DRAWINGS

Fig. 1 is a schematic block diagram of an embodiment of the present invention;

Fig. 2 is a flow diagram of the operations for executing instructions in the embodiment of Fig. 1;

Fig. 3 is a schematic diagram illustrating the operation of the present invention in the execution of a branch instruction, as well as the format of instructions and information stored in memory;

Fig. 4 is a schematic diagram of details of the branch controller, including the branch-destination actual address table controller; and

Fig. 5 is a flow diagram illustrating the operations performed for editing of a program in accordance with this invention.

## DETAILED DESCRIPTION OF A PREFERRED EMBODIMENT

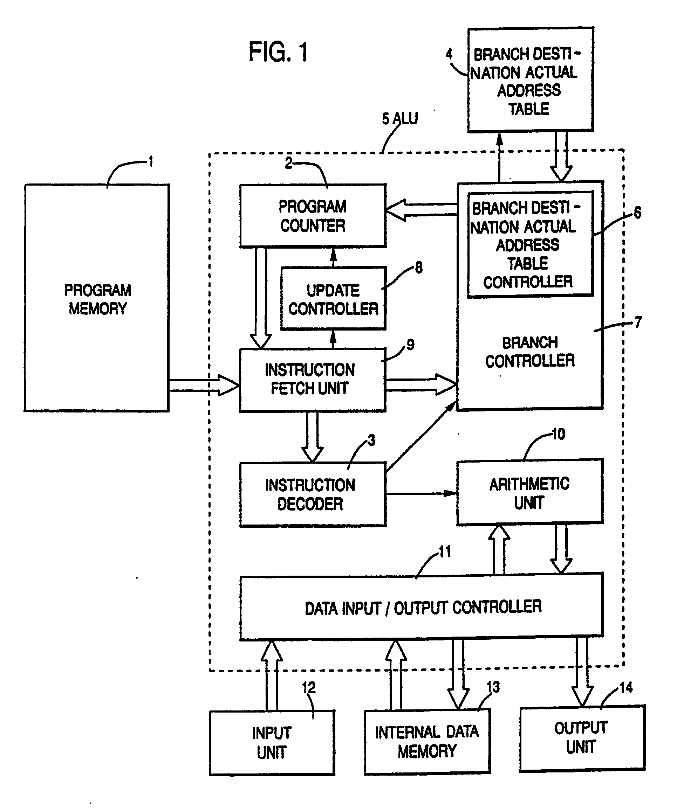

The data processing system illustrated in Fig. 1 includes a program memory for storing programs comprised of branch instructions, branch destination instructions and operating instructions, which programs control the operations of an arithmetic and logic unit (ALU) 5. The arithmetic and logic unit 5, under control of the program stored in the program memory 1, responds to external signals received by an input unit 12 and provides an output control signal to an output unit 14 for effecting control over a process or operation. An internal data memory 13 is connected to the arithmetic and logic unit 5 for storing interim calculated results.

The arithmetic and logic unit 5 includes a program counter 2 for indicating the address in the program memory 1 where an instruction to be executed is stored, an instruction fetch unit 9 responsive to the address stored in the program counter 2 for fetching from the program memory 1 an instruction to be executed, a program counter update controller 8 for updating the address in the program counter 2 in response to the instruction fetch unit 9, and a branch controller 7 for performing a branching operation in response to a branch instruction received by the instruction fetch unit 9. An arithmetic unit 10 performs an arithmetic or logic operation according to an operation instruction indicated by the instruction decoder 3 in accordance with an external signal received from the input unit 12 via a data input/output controller 11 and provides an external control signal as a result of its operation to the output unit 14 via the controller 11.

In accordance with the present invention, there is also provided as part of the branch controller 7 a branch destination actual address table controller 6 for controlling the fetching of the storage address of an indicated branch destination instruction from a branch destination actual address table 4, which operates as a branch destination location table storing addresses at which branch destination instructions are stored in the program memory 1. Thus, in contrast to prior devices which operate to execute branch instructions, in which the address of the branch destination instruction is included in a field of the branch instruction, the present invention provides a separate branch destination actual address table for storing the addresses at which branch destination instructions are stored in the program memory, and the branch instructions include a label or identifier indicating a location in the branch destination actual address table where a branch destination address is stored if a branch destination instruction or jump routine is located in the program memory in conjunction with the branch instruction being executed.

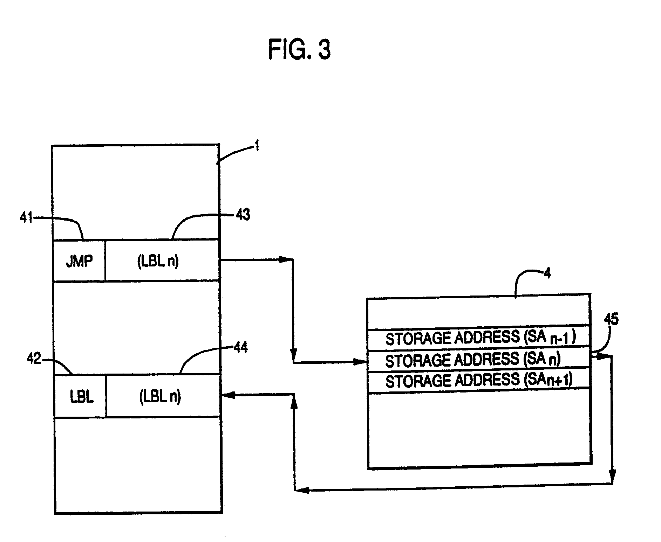

The manner in which the present invention operates to control the execution of branch instructions so as to maintain continuous system control will be described with reference to Fig. 3 of the drawings. In Fig. 3, reference numeral 41 denotes a branch instruction, 42 denotes a branch destination instruction, 43 denotes identification information or a label number for identifying a location in the branch destination actual address table 4 where an address of the branch destination instruction is stored, 44 denotes identification information or a label number for identifying the location in the branch destination actual address table 4 where the address of the branch destination instruction is stored in tle program memory 1, and 45 denotes a storage address of a branch destination instruction as stored in the branch destination actual address table 4. As can be seen, the label numbers 43 and 44 identify the same address of a storage location in the table 4 associated with the branch instruction and corresponding branch destination instruction.

Describing the manner in which data is written into the table 4, when a branch destination instruction 42, representing a jump routine, for example, is to be written into the program memory 1, its storage address is written at a location indicated by the label number 44 in the branch destination actual address table 4. When a branch destination instruction 42 is deleted from the program memory 1, a value representing an invalid address, such as all zeros, for example, is written into the branch destination actual address table 4 at the location indicated by the label number 44 of the branch destination instruction 42. When a branch destination instruction 42 is shifted within the program memory 1, the storage address of the branch destination instruction 42 after the shift is stored into the branch destination actual address table 4 at the location indicated by the label number 44 of the branch destination instruction 42. Thus, whenever the program stored in the program memory 1 is edited by addition, deletion or movement of a branch destination instruction 42, the location information corresponding to the branch instruction and branch destination instruction at the location indicated by the label number 44 in the branch destination actual address table 4 will be edited to validate the branch destination instruction.

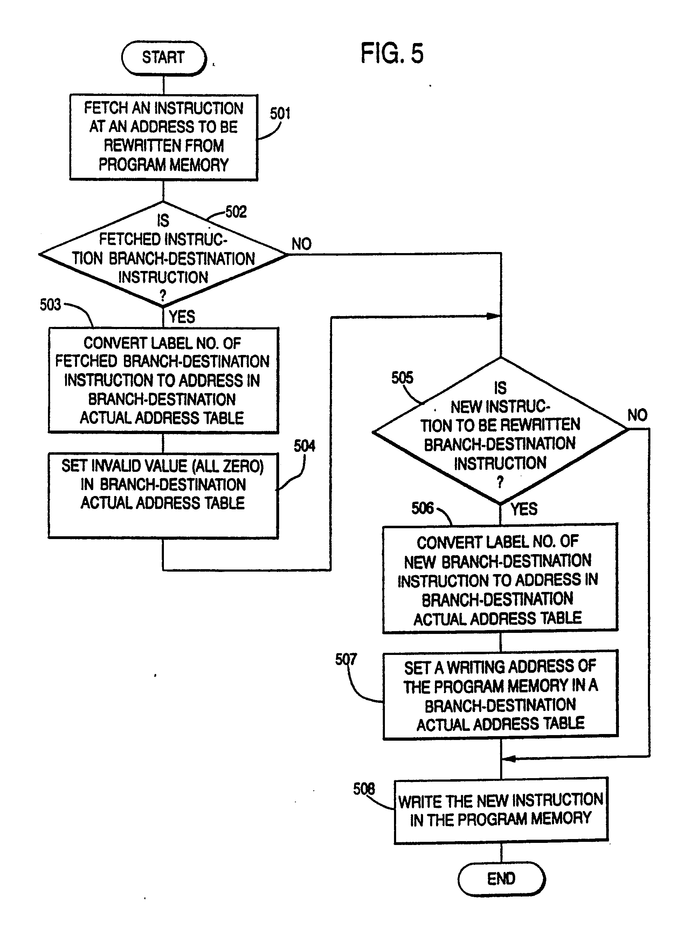

More particularly, looking to the flow chart of Fig. 5, when it is desired to edit the program stored in the program memory, the operator inputs a program memory address of an instruction to be rewritten. The inputted address is inserted in the program counter 2 which controls the instruction fetch unit 9 to fetch the instruction from the program memory (step 501). The fetched instruction is decoded by the instruction decoder 3 and it is determined whether the fetched instruction is a branch destination instruction (step 502).

If it is determined from step 502 that the fetched instruction is a branch destination instruction, the label number in the fetched branch destination instruction is converted to an address in the branch destination actual address table 4 (step 503) and the branch destination instruction storage address 45 in the branch destination actual address table 4 at that location is set to an invalid value (all zeros) to invalidate the entry (step 504).

Following the invalidation of the entry in the branch destination actual address table 4, or in the case where it is determined in step 502 that the fetched instruction is not a branch destination instruction, it is determined whether the new instruction to be rewritten at the inputted program memory address is a branch destination instruction (step 505). If the new instruction to be rewritten is not a branch destination instruction, then the new instruction is immediately written into the program memory at the inputted address (step 508). On the other hand, if the new instruction to be rewritten is a branch destination instruction, the label number of the new branch destination instruction is converted to an address in the branch destination actual address table 4 (step 506) and a program memory address for the new branch destination instruction is written into the branch destination actual address table at the address location determined in step 506 to complete the updating of the branch destination actual address table 4 (step 507). The new instruction is then written into the program memory (step 508).

Thus, when the operator inserts a branch destination instruction 42 into the program stored in the program memory 1, the system will enter a routine in which the address of the branch destination instruction 42 in the program is automatically stored in the table 4 at a location indicated by the label number 44 of the branch destination instruction 42. Similarly, when a branch destination instruction is deleted from the program stored in the program memory 1 by the operator, a routine will automatically delete or render invalid the address of that branch destination instruction as stored in the branch destination actual address table 4. Such automatic operation by the system has the advantage of eliminating the possibility of the operator inadvertently failing to insert the storage address 45 at the proper location in the address table 4.

As can be seen from the routine illustrated in Fig. 5, whenever an instruction at a selected program memory address is to be rewritten, if that instruction fetched from the program memory is a branch destination instruction, the system will automatically take steps to invalidate the entry for that instruction in the branch destination actual address table before the new instruction is written into the program memory. Thus, where the editing of the program memory is not completed or is completed with an error, the incomplete or invalid condition in the program memory resulting from this improper or incomplete editing will result in an invalid entry in the branch destination actual address table. Thus, as the program stored in the program memory is being executed, upon reaching the instruction representing the invalid entry, the system will simply pass over that instruction and proceed to the next instruction in the sequence as stored in the program memory, since the branch destination actual address table will not produce a valid branch address.

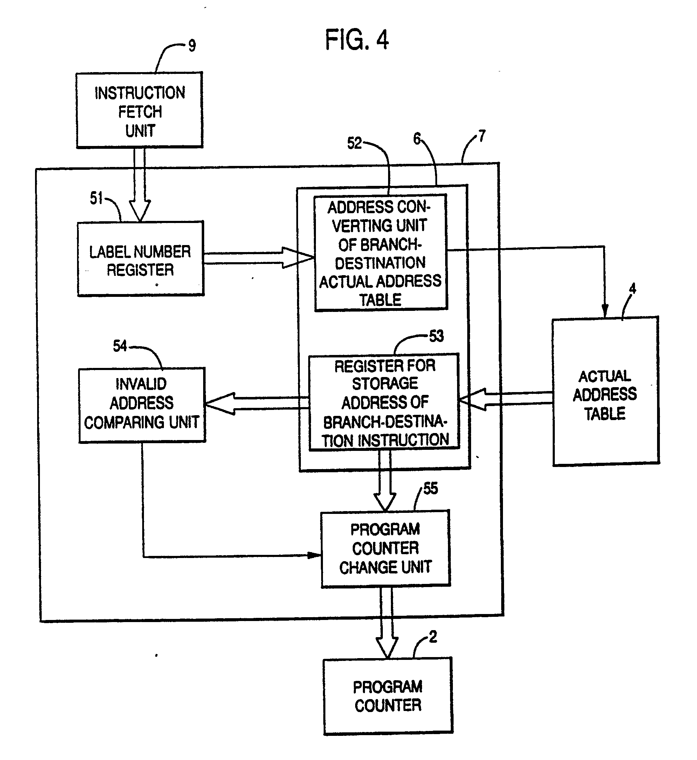

Fig. 4 shows details of the branch controller 7, including the branch destination actual address table controller 6. The branch controller 7 includes a label number register 51 connected to receive a label number from an instruction fetched by the instruction fetch unit 9. The output of the label number register 51 is supplied to an address converting unit 52 in the branch destination actual address table controller 6, which address converting unit 52 operates to convert the label number received from the label number register 51 to an address of a storage location in the actual address table 4. The actual address table 4 is responsive to the address received from the address converting unit 52 to supply a program memory address at that location to an address register 53 within the branch destination actual address table controller 6. Connected to the address register 53 is an invalid address comparing unit 54 included in the branch controller 7, which comparing unit operates to determine whether the contents of the address register 53 represent a valid program memory address or an invalid value (all zeros). On the basis of this determination, the comparing unit 54 provides a control signal to a program counter change unit 55 connected to receive the contents of the address register 53. If the address register 53 holds a valid program memory address, that address will be supplied to the program counter 2.

The operation of the system of Fig. 1 for execution of instructions will now be described to illustrate the various features of the present invention.

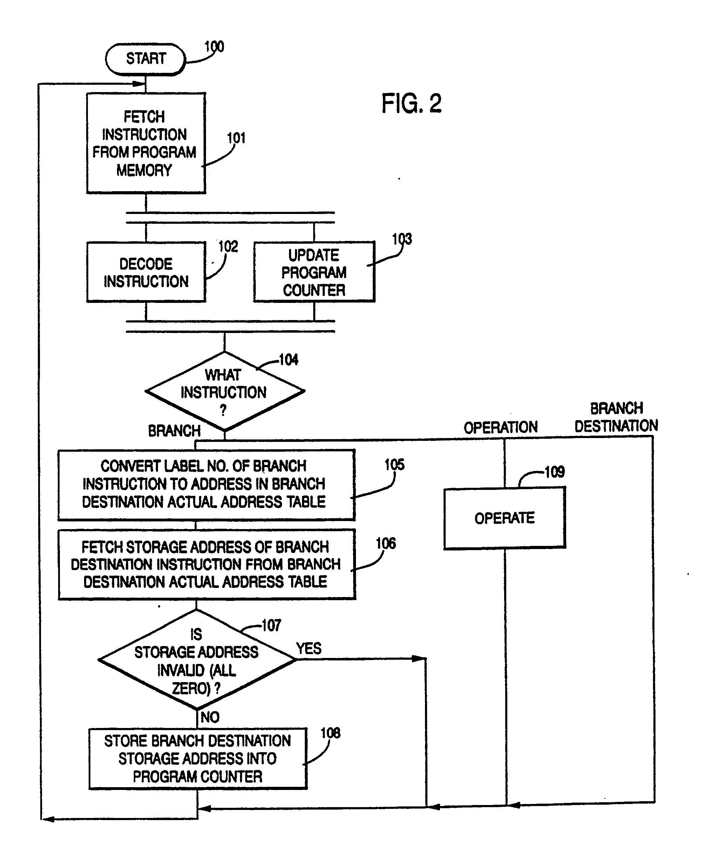

Referring to the flow chart of Fig. 2 in conjunction with the schematic block diagram of Fig. 1, the instruction fetch unit 9 within the arithmetic and logic unit 5 operates to fetch an instruction from the program memory 1 at an address designated by the program counter 2 (step 101). The instruction decoder 3 receives the instruction from the instruction fetch unit 9 and decodes the instruction (step 102), and from the decoding of the operation code of the instruction, it is determined what type of instruction is to be executed (step 104). If the instruction is a branch instruction 41, operation of the branch controller 7 is initiated by an output from the instruction decoder 3 and this operates the branch destination actual address table controller 6 (step 105). The branch destination actual address table controller 6 converts the label number 43 received from the instruction fetch unit 9 into an address of a storage location in the branch destination actual address table 4 and fetches a branch destination instruction storage address 45 corresponding to the label number 43 from the table 4 (step 106).

When the storage address fetched from the branch destination actual address table 4 is a valid address, i.e. it is a value other than all zeros, for example, this storage address is inserted into the program counter 2 (step 108) to thereby initiate the branch operation. On the other hand, if the branch destination instruction storage address 45 fetched from the branch destination actual address table 4 is an invalid address, i.e. all zeros (Yes), for example, the invalid address will not be stored in the program counter 2.

As seen in Fig. 2, in parallel with the decoding of the instruction fetched by the instruction fetch unit 9 in the instruction decoder 3 (step 102), the instruction fetch unit 9 also initiates operation of the program counter update controller 8 to update the count in the program counter 2 (step 103). Thus, in the case of execution of a branch instruction, when the branch destination instruction storage address 45 fetched from the branch destination actual address table 4 is a valid address, the fetched storage address 45 will be inserted in the program counter 2 to achieve the branch operation; however, when the fetched storage address 45 is an invalid address, the program counter 2 will retain the count as incremented by the program counter update controller 8, i.e. the address of the instruction following the branch instruction 41 in the program memory 1.

In accordance with the present invention, when the branch instruction 41 is executed and the branch destination instruction storage address 45 is an invalid address, the program counter 2 is only updated by the program counter update controller 8, so that the instruction to be next executed by the arithmetic and logic unit 5 will be that instruction located at the address next to the branch instruction 41. In this way, unless the branch destination actual address table 41 contains a valid address of a branch destination instruction when the table 4 is accessed during execution of a branch instruction 41, the branch operation will be bypassed, thereby preventing branching to a location in the program where a branch destination instruction has not been properly inserted.

Fig. 2 also shows that, if the instruction fetched by the instruction fetch unit 9 is a branch destination instruction or an operation instruction, the instruction is executed (step 109) without operating the branch controller 7. Under these circumstances, the instruction to be next executed by the arithmetic and logic unit 5 will be the instruction stored at the address next to that of the executed instruction.

In prior instruction execution control units, the branch address identified by the branch instruction was regarded as a valid address regardless of its value, and so a branching operation was performed in any case during execution of such instruction. Therefore, when a branch instruction having no corresponding branch destination was executed, an address location where no program is present was stored in the program counter and branching to that location was executed causing a malfunction in the operation of the arithmetic and logic unit. To avoid such a situation, the system described in Japanese Laid-open application No. 61-61413 provided for a checking to determine whether branching is valid or invalid, and when invalid branching was detected, an error signal was generated to stop system operation. This avoided the problem of branching to an invalid location in the program, but also provided the disadvantage that continuous system operation could not be ensured when an invalid branching situation was encountered.

As seen from the foregoing discussion of a preferred embodiment of the present invention, the disadvantages of prior systems have been eliminated in that invalid branching to a location where no branch destination instruction is located cannot occur and invalid branching will not result in interruption of system operation. In this regard, if an invalid branch situation occurs, the system simply indexes to the instruction next to the branch instruction and continues process control without interruption.

According to the present invention, when a program is edited or changed with the result that an incorrect program or an incomplete program is input while the system is in operation, interruption of system operation can be avoided so that a control output signal is provided continuously by the system to maintain continuous process control or operation. Thus, dangerous or disadvantageous interruption of a continuous process or operation due to accidental or careless editing of the control program can be avoided. In addition, maintenance of the system and editing of the control program can be facilitated without fear of malfunction of the system, and the system can be applied more broadly to various types of process control systems requiring continuous operation.

While a preferred embodiment of the present invention has been described herein, it is obvious that various changes and modifications to that embodiment are possible without departing from the basic features of the present invention. For example, it is indicated that an invalid address in the branch destination actual address table 4 may be represented by all zeros. However, it should be apparent that the validity of an address stored in the table 4 can be represented by a validity flag, so that when a branch destination instruction is deleted from the program, the address of that instruction appearing in the table 4 can be invalidated by simply resetting the validity flag associated therewith.

## Claims

1. A data processor, comprising:
a program memory (1) having a plurality of addressable storage locations for storing a program including operation instructions, branch instructions (41) and branch destination instructions (42) in a predetermined sequence for performing a predetermined operation or controlling a predetermined process,
means (4) for storing a branch destination location table, including addresses of storage locations (45) of branch destination instructions (42) in said program memory (1) stored at storage locations in said table indicated by a branch instruction (41), and
an arithmetic and logic unit (5) for fetching instructions from said program memory (1) and for executing the fetched instructions to perform said predetermined operation or control said predetermined process, including means (6) responsive to a fetched branch instruction for accessing a location in said branch destination location table (4) indicated by said branch instruction (41) to read an address therefrom, means (54) for determining whether the address read from said branch destination location table (4) is a valid address, and means (2, 8, 9, 55) responsive to said determining means for fetching from said program memory (1) either a branch destination instruction (42) from the storage location identified by said address read from said branch destination location table (4) when said address is determined to be valid, or an instruction other than said branch destination instruction iden tified by said address read from said branch destination location table (4) when said address is determined to be invalid.

2. The data processor of claim 1, wherein said fetching means includes a program counter (2) for storing an address of a storage location in said program memory (1) of an instruction to be fetched, an instruction fetch unit (9) responsive to said program counter (2) for fetching an instruction from a storage location in said program memory (1) indicated by the address stored in said program counter (2), and control means (55), responsive to said determining means (54) for resetting said program counter (2) to store an address read from said branch destination location table (4) only when said address has been found to be valid.

3. The data processor of claim 2, wherein said fetching means further includes update means (8) responsive to said instruction fetch unit (9) for incrementing said program counter (2) after the fetching of an instruction from said program memory (1).

4. A data processor, comprising:
a program memory (1) having a plurality of addressable storage locations for storing a program including operation instructions, branch instructions (41) and branch destination instructions (42) in a predetermined sequence for performing a predetermined operation or controlling a predetermined process,
means (4) for storing a branch destination location table, including addresses of storage locations (45) of branch destination instructions in said program memory (1) stored at storage locations in said table indicated by a branch instruction (41),
a program counter (2) for storing an address of a storage location in said program memory (1),
an instruction fetch unit (9) resposive to said program counter (2) for fetching an instruction from a storage location in said program memory (1) indicated by the address stored in said program counter (2),
update means (8) for incrementing said program counter (2) after an instruction is fetched from said program memory (1) by said instruction fetch unit (9),
instruction execution means (10) for executing instructions fetched by said instruction fetch unit (9), and
branch control means (7) responsive to a branch instruction (41) fetched by said instruction fetch unit (9) for accessing a location in said branch destination location table (4) to examine an address therein and for storing said address from said branch destination location table (4) into said program counter (2) only if said address is a valid address.

5. The data processor of claim 6, wherein said branch control means (7) includes means (54) for determining whether an address stored in said branch destination location table (4) is a valid address.

6. The data processor of any one of claims 1 to 5, wherein said branch destination location table (4) includes validity flags for indicating whether an address stored therein is valid.

7. The data processor of any one of claims 1 to 6, wherein said branch instructions (41) include an information field (43) having a label for identifying the location of a branch destination instruction (42), and said fetching means includes means (52) for converting a label included in a branch instruction (41) to the address of a storage location in said branch destination location table (4).

FIG. 1

FIG. 2

START — 100

FETCH INSTRUCTION FROM PROGRAM MEMORY — 101

DECODE INSTRUCTION — 102

UPDATE PROGRAM COUNTER — 103

WHAT INSTRUCTION ? — 104

BRANCH

OPERATION

BRANCH DESTINATION

CONVERT LABEL NO. OF BRANCH INSTRUCTION TO ADDRESS IN BRANCH DESTINATION ACTUAL ADDRESS TABLE — 105

FETCH STORAGE ADDRESS OF BRANCH DESTINATION INSTRUCTION FROM BRANCH DESTINATION ACTUAL ADDRESS TABLE — 106

OPERATE — 109

IS STORAGE ADDRESS INVALID (ALL ZERO) ? — 107

YES

NO

STORE BRANCH DESTINATION STORAGE ADDRESS INTO PROGRAM COUNTER — 108

FIG. 3

## FIG. 4

FIG. 5

START

FETCH AN INSTRUCTION
AT AN ADDRESS TO BE
REWRITTEN FROM
PROGRAM MEMORY — 501

IS
FETCHED INSTRUC-
TION BRANCH-DESTINATION
INSTRUCTION
? — 502

NO

YES

CONVERT LABEL NO. OF
FETCHED BRANCH-DESTINATION
INSTRUCTION TO ADDRESS IN
BRANCH-DESTINATION
ACTUAL ADDRESS TABLE — 503

SET INVALID VALUE (ALL ZERO)
IN BRANCH-DESTINATION
ACTUAL ADDRESS TABLE — 504

IS
NEW INSTRUC-
TION TO BE REWRITTEN
BRANCH-DESTINATION
INSTRUCTION
? — 505

NO

YES

CONVERT LABEL NO. OF
NEW BRANCH-DESTINATION
INSTRUCTION TO ADDRESS IN
BRANCH-DESTINATION
ACTUAL ADDRESS TABLE — 506

SET A WRITING ADDRESS OF
THE PROGRAM MEMORY IN A
BRANCH-DESTINATION
ACTUAL ADDRESS TABLE — 507

WRITE THE NEW INSTRUCTION
IN THE PROGRAM MEMORY — 508

END